# EUROPEAN PATENT SPECIFICATION

(11) **EP 2 686 513 B1**
(45) Date of publication and mention of the grant of the patent: **23.11.2016**
(21) Application number: 12711999.8
(22) Date of filing: 09.03.2012
(51) Int. Cl.: E05C 1/06, B64D 29/06, E05B 13/00

(54) **PIN LATCH HAVING AN INTERMEDIATE POSITION**
STIFTVERRIEGELUNG MIT EINER ZWISCHENPOSITION
VERROU À TIGE COMPORTANT UNE POSITION INTERMÉDIAIRE

(30) Priority: 15.03.2011 US 201161452717 P; 12.05.2011 US 201161485317 P
(43) Date of publication of application: 22.01.2014
(73) Proprietor: Alcoa Inc., Pittsburgh, PA 15212-5858 (US)
(72) Inventor: DO, Thai, Laguna Niguel, CA 92677 (US)
(74) Representative: Trinks, Ole
(86) International application number: PCT/US2012/028418
(87) International publication number: WO 2012/125437

(56) References cited:
- FR-A1- 2 397 503
- FR-A1- 2 852 049
- US-A- 4 828 299

## Description

### Technical Field of the Invention

The present invention relates to pin latches, and, more particularly, a pin latch having an intermediate position, and a pin latch having an automatic intermediate position.

### Background Art

Removable and moveable elements installed on exterior surfaces of aerospace vehicles, such as hatches, doors, access panels, engine cowlings, nacelles, and radomes employ latches. Handles mounted on the latches are used to open or close the elements. A typical pin latch has two positions: a closed position and an open position.

The document FR 2 397 503 A1 discloses a pin latch according to the preamble of claim 1. Other pin latches are disclosed in FR 2 852 049 A1 and US 4 828 299 A.

### Disclosure of the Invention

The invention discloses a pin latch according to claim 1, i.e. a pin latch comprising a housing having at least one pin; a handle attached pivotally to the housing; and a shear pin housed slidably within the housing and connected to the handle, wherein the handle is moveable between a closed position, in which the handle is retained releasably within the housing and the shear pin is extended from the housing, and an open position, in which the handle is retracted from the housing and the shear pin is retracted within the housing, and wherein the handle is further moveable to an intermediate position, in which the handle is retained releasably in a position between its closed position and its open position,
wherein
the pin latch further comprises a finger member connected to the handle and to the housing, the finger member including at least one slot that is sized and shaped to receive slidably the at least one pin of the housing, the at least one slot including a first slot portion, a second slot portion, and a third slot portion that bridges the first and second slot portions with one another, the third slot portion forming a stop located between the first and second slot portions, such that when the handle is moved from its closed position to its intermediate position, the at least one pin of the housing travels within the first slot portion of the finger member and engages the stop of the finger member in order to retain releasably the handle in its intermediate position, and wherein the finger member is moveable from an engaged position, in which the at least one pin of the housing engages the stop of the finger member, and a disengaged position, in which the at least one pin of the housing is disengaged from the stop and is adapted to travel within the second slot portion of the finger member so as to enable the handle to be moved from its intermediate position to its open position;
or
wherein the shear pin includes a slot and a stop located at one end of the slot, and wherein the pin latch further comprises a button mechanism including a cross-pin, wherein when the handle is in its closed position, the button mechanism is in a depressed position such that the cross-pin of the button mechanism is disengaged from the slot of the shear pin, wherein when the handle is moved from its closed position to its intermediate position, the button mechanism is moved from its depressed position to a raised position, and the shear pin retracts into the housing such that the cross-pin of the button mechanism engages the slot of the shear pin and glides therein until the cross-pin engages the stop of the shear pin.

In an embodiment, the finger member includes at least one side member having a first end and a second end opposite the first end, and wherein the at least one slot of the finger member is formed within the at least one side member. In an embodiment, the at least one side member of the finger member includes a pair of side members, and the at least one pin of the housing includes a pair of pins, and wherein the slot of one of the side members is sized and shaped to receive slidably one of the pins of the housing, and the slot of the other of the side members is sized and shaped to receive slidably the other of the pins of the housing. In an embodiment, the finger member includes a grasping member that bridges the pair of side members, and wherein the grasping member facilitates the movement of the finger member from its engaged position to its disengaged position. In an embodiment, the first slot portion of the slot of one of the side members of the finger member is formed parallel to the second slot portion thereof, and the first slot portion of the other of the side members of the finger member is formed parallel to the second slot portion thereof. In an embodiment, the third slot portion of the slot of one of the side members of the finger member is positioned obliquely relative to the first and second slot portions thereof, and the third slot portion of the slot of the other of the side members of the finger member is positioned obliquely relative to the first and second slot portions thereof.

In an embodiment, the pin latch further comprises a link having a first end and a second end opposite the first end of the link, the first end of the link being attached pivotally to the handle and the second end of the link being attached to the shear pin.

In an embodiment, the handle includes a block, wherein the first end of the link is attached pivotally to the block and the first ends of the side members of the finger members are attached pivotally to the block. In an embodiment, the handle includes a back spring.

In an embodiment, the pin latch further comprises at least one finger extension spring having a first end connected to one of the side members of the finger member and a second end opposite the first end of the at least one finger extension spring connected to the link. In an embodiment, the at least one finger extension spring includes a pair of finger extension springs, one of which is connected to one of the pair of side members and to the link, and the other of which is connected to the other of the pair of side members and to the link.

In an embodiment, the housing includes a first end, a second end opposite the first end of the housing, and an aperture formed within the first end of the housing, and wherein the shear pin is sized and shaped to slide within the aperture.

In an embodiment, the handle includes a trigger that is releasably engageable with the at least one pin of the housing when the handle is in its closed position.

### Brief Description of the Drawings

For a more complete understanding of the present invention, reference is made to the following detailed description of exemplary embodiments considered in conjunction with the accompanying drawings, in which:
**FIG. 1** is a top perspective view of a pin latch constructed in accordance with an embodiment of the present invention, the pin latch being shown in a closed position;
**FIG. 2** is a partial, cross-sectional side view of the pin latch shown in **FIG. 1****,** with portions thereof being shown transparent for the purposes of clarity;
**FIGS. 3A** and **3B** are top perspective and top plan views, respectively, of a housing employed by the pin latch shown in **FIG. 1****;**
**FIG. 4** is a top perspective view of a handle employed by the pin latch shown in **FIG. 1****;**
**FIG. 5** is a top perspective view of the pin latch shown in **FIG. 1****,** the pin latch being shown in an intermediate position, and with portions thereof being shown transparent for the purposes of clarity;
**FIG. 6** is a partial, cross-sectional side view of the pin latch shown in **FIG. 5****,** with portions thereof being shown transparent for the purposes of clarity;
**FIGS. 7A** through **7C** show perspective, front elevational, and side elevational views, respectively, of a block employed by the pin latch shown in **FIGS. 1** and **5****;**
**FIGS. 8A** through **8D** show perspective, top plan, front elevational, and side elevational views, respectively, of a finger member employed by the pin latch shown in **FIGS. 1** and **5****;**
**FIG. 9** is a top perspective view of the pin latch shown in **FIG. 1****,** the pin latch being shown in an open position;
**FIG. 10** is a partial, cross-sectional side view of the pin latch shown in **FIG. 9****,** with portions thereof being shown transparent for the purposes of clarity;
**FIG. 11** is a top perspective view of a pin latch constructed in accordance with another embodiment of the present invention, the pin latch being shown in a closed position;
**FIG. 12** is a partial, cross-sectional side view of the pin latch shown in **FIG. 11**;
**FIGS. 13A** through **13G** show top and bottom perspective, top plan, side, front and rear elevational, and bottom plan views of a housing employed by the pin latch shown in **FIG. 11****;**
**FIGS. 14A** and **14B** are top and bottom perspective views, respectively, of a handle employed by the pin latch shown in **FIG. 11****;**
**FIG. 15** is a top perspective view of the pin latch shown in **FIG. 11****,** the pin latch being shown in an intermediate position;
**FIG. 16** is a cross-sectional side view of the pin latch shown in **FIG. 15**;
**FIGS. 17A** and **17B** show perspective and rear elevational views, respectively, of a block employed by the pin latch shown in **FIGS. 11** and **15****;**
**FIGS. 18A** through **18D** show top perspective, top plan, side elevational, and rear elevational views, respectively, of a shear pin employed by the pin latch shown in **FIGS. 11** and **15****;**
**FIGS. 19A** through **19E** show top perspective, top plan, side elevational, and rear and front elevational views, respectively, of a plunger employed by the pin latch shown in **FIGS. 11** and **15****;**
**FIGS. 20A** through **20E** show top perspective, top plan, front elevational, side elevational, and bottom plan views, respectively, of a button employed by the pin latch shown in **FIGS. 11** and **15****;**
**FIG. 21** is a top perspective view of the pin latch shown in **FIG. 11****,** the pin latch being shown in an open position; and
**FIG. 22** is a cross-sectional side view of the pin latch shown in FIG. **21**.

### Best Mode for Carrying Out the Invention

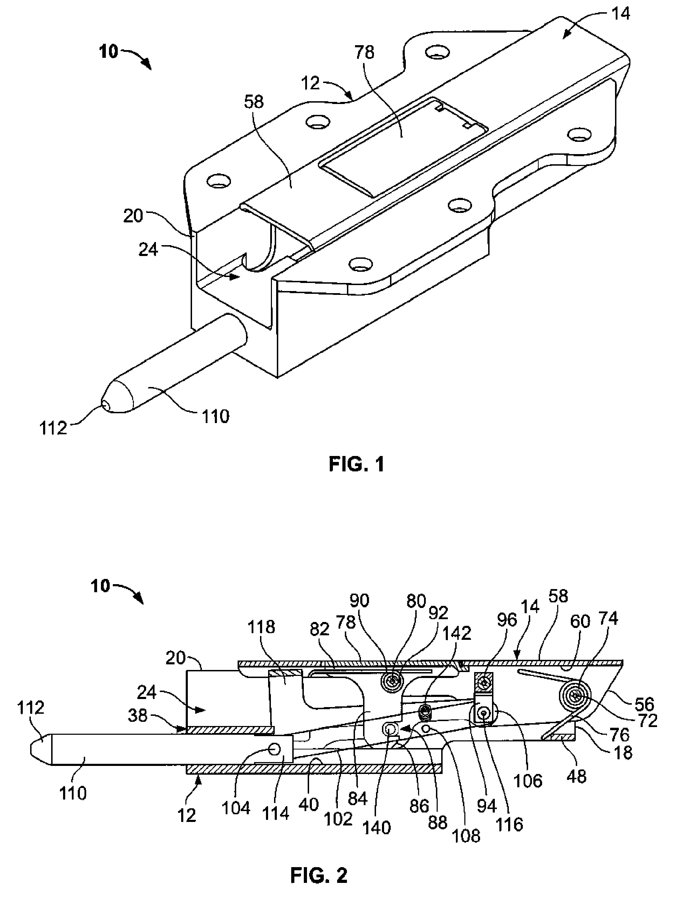

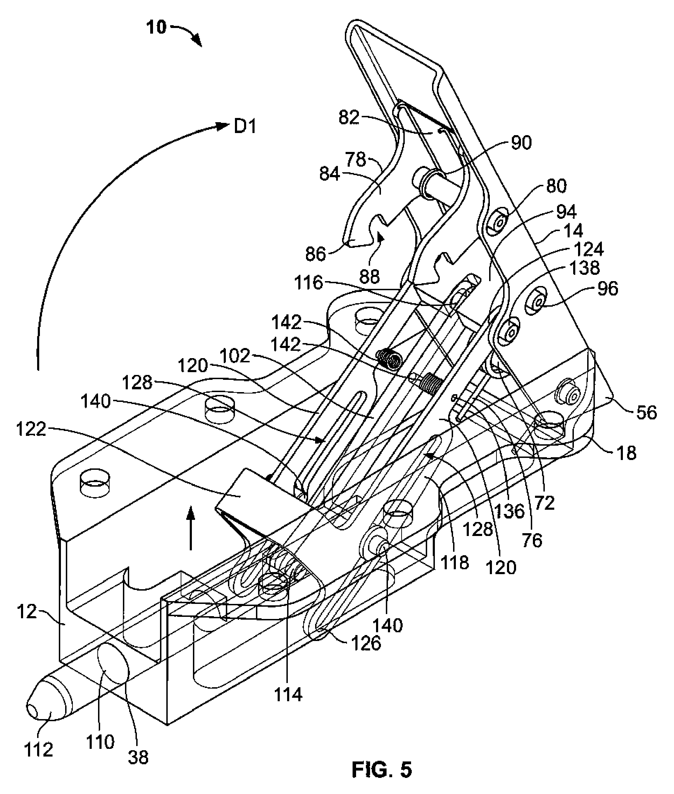

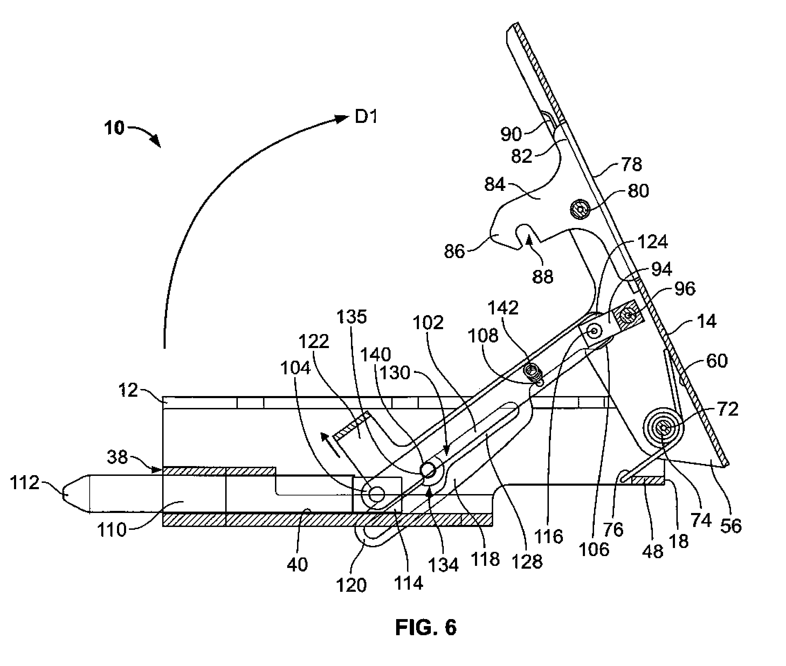

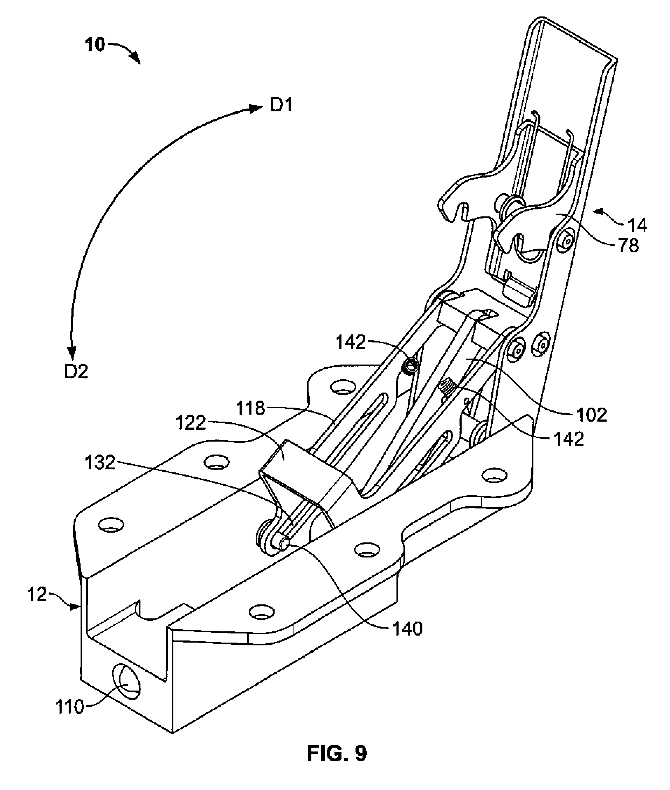

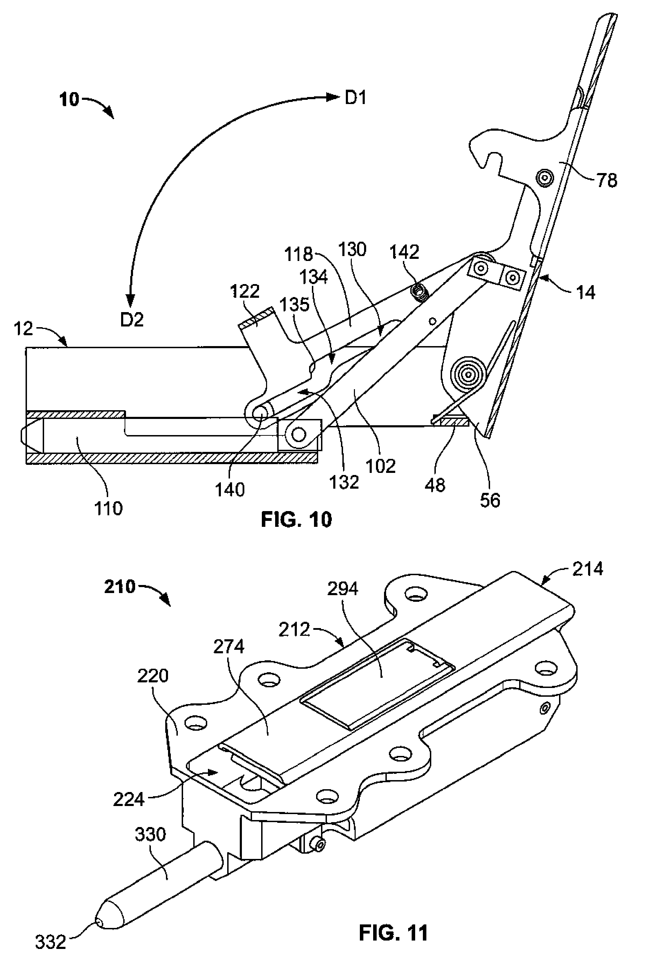

Referring to **FIGS. 1** and **2****,** according to the invention, a pin latch **10** includes a housing **12** and a handle **14** attached pivotally to the housing **12.** The handle **14** pivots relative to the housing **12** between a closed position, in which the handle **14** is releasably retained within the housing **12** (see **FIGS. 1** and **2**), and an open position, in which the handle 14 fully extends from the housing **12** (see **FIGS. 9** and **10**). The handle **14** can be set in an intermediate position,
whereby the handle **14** is releasably retained in a position that is between its open and closed positions (see **FIGS. 5** and **6**). The structure and function of the housing **12** and the handle **14** shall be described in further detail.

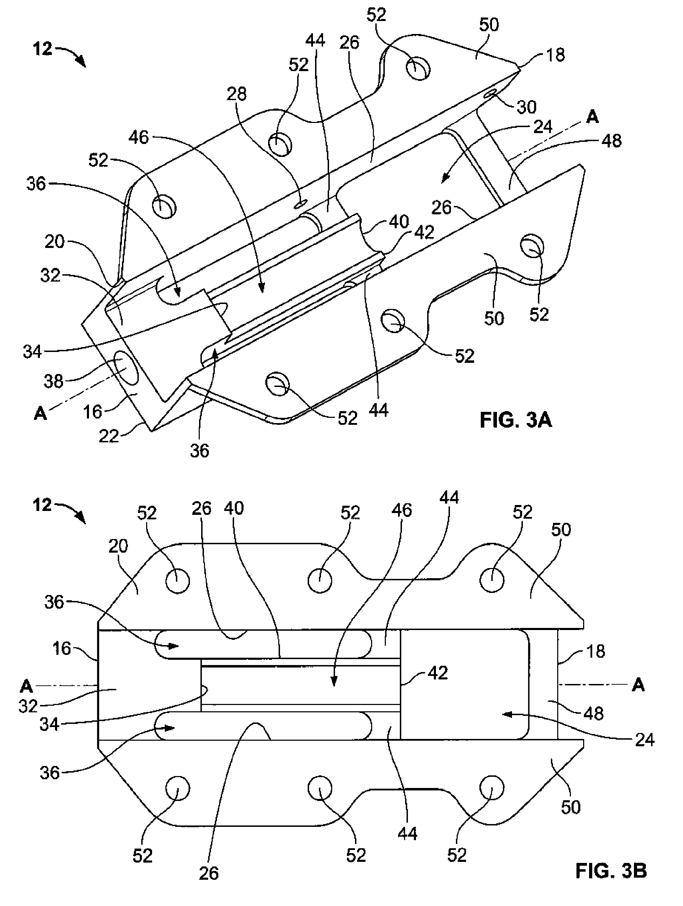

Referring to **FIGS. 3A** and **3B****,** the housing **12** includes a first end **16** a second end **18** opposite the first end **16,** an upper end **20,** and a lower end **22** opposite the upper end **20.** In an embodiment, a channel **24** extends from the first end **16** to the second end **18,** and is disposed between a pair of sidewalls **26.** In an embodiment, each of the sidewalls **26** includes an aperture **28** positioned intermediate the first and second ends **16, 18,** and another aperture **30** positioned proximate to the second end **18** (only the apertures **28, 30** of one of the sidewalls **26** being shown in **FIG. 3A**)**.** In an embodiment, a block portion **32** defines a portion of the channel **24** and extends from the first end **16** to an end **34.** In an embodiment, the block portion **32** includes slots **36** formed adjacent the sidewalls **26.** In an embodiment, the block portion **32** includes an aperture **38** (see **FIG. 3A**) that extends from the first end **16** to the end **34** along a longitudinal axis **A-A.** In an embodiment, a semi-tubular-shaped trough **40** extends from the end **34** of block portion **32** to an end **42** intermediate the first and second ends **16, 18**. In an embodiment, the trough **40** is integrally connected with the end **34** of the block portion **32.** In an embodiment, the end **42** of the trough **40** is connected to the sidewalls **26** by a pair of spans **44.** In an embodiment, the trough **40** has an interior portion **46** that is aligned with the aperture **38.** In an embodiment, a crossbar **48** extends between the sidewalls **26** proximate to the second end **18.**

Still referring to **FIGS. 3A** and **3B**, in an embodiment, a pair of mounting brackets **50** extends outwardly from the upper end **20** of the housing **12** perpendicular to the sidewalls **26,** and longitudinally from the first and second ends **14, 16.** In an embodiment, the mounting brackets **50** enable the pin latch **10** to be mounted to an external structure. In this regard, and in an embodiment, each of the brackets **50** includes a plurality of apertures **52** that are sized and shaped to receive mounting hardware, such as fasteners (e.g., bolts, screws, rivets, etc.), for fastening the pin latch **10** to the external structure (not shown in the Figures).

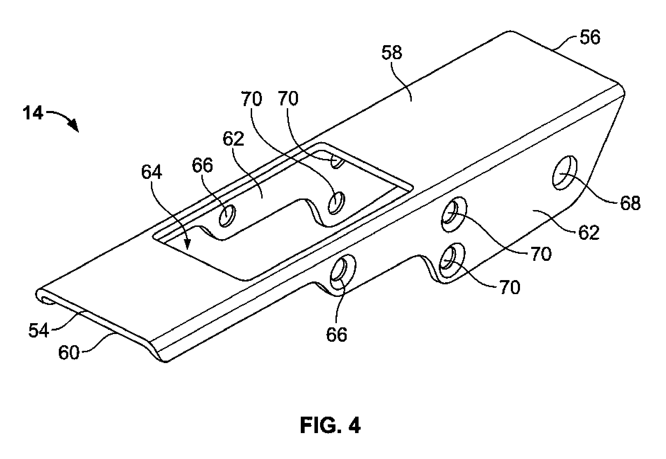

Referring to **FIG. 4****,** in an embodiment, the handle **14** includes a first end **54** and a second end **56** opposite the first end **54,** an exterior surface **58,** an interior surface **60,** and opposing side members **62.** In an embodiment, the handle **14** includes a rectangular-shaped aperture **64** extending from the exterior surface **58** to the interior surface **60**. In an embodiment, each of the opposing side members **62** includes a trigger pin aperture **66** positioned at one end thereof, a pivot pin aperture **68** positioned at an opposite end thereof (only one of which is shown in **FIG. 4**), and a pair of apertures **70** positioned intermediate the apertures **66, 68.**

Referring to **FIGS. 2** and **5****-6**, in an embodiment, the second end **56** of the handle **14** is attached pivotally to the second end **18** of the housing **12** by a handle pivot pin **72** that extends through the apertures **68** of the opposing side members **62** (the apertures **68** being shown in **FIG. 4**). In an embodiment, the handle pivot pin **72** includes bushings **74.** In an embodiment, a back spring **76** surrounds the handle pivot pin **72** and engages the crossbar **48** of the housing **12** and the interior surface **60** of the handle **14** in order to maintain it in its intermediate and open positions, which will be described in greater detail below.

Still referring to **FIGS. 2****,** **5** and **6****,** in an embodiment, the handle **14** includes a trigger **78** mounted pivotally therein by a pair of trigger pivot pins **80,** which are fitted within the first apertures **66** of the opposing side members **62** (the first apertures **66** being shown in **FIG. 4**). In an embodiment, the trigger **78** includes a rectangular-shaped top portion **82** that is sized and shaped to mate with the aperture **64** of the handle **14** (the aperture **64** being shown in **FIG. 4****),** and a pair of opposing detents **84,** each having a cupped tip **86** and a slot **88,** and depending from the top portion **82** of the trigger **78.** In an embodiment, the trigger **78** includes a trigger spring **90** mounted to the trigger pivot pins **80** by trigger bushings **92** (see **FIG. 2****).**

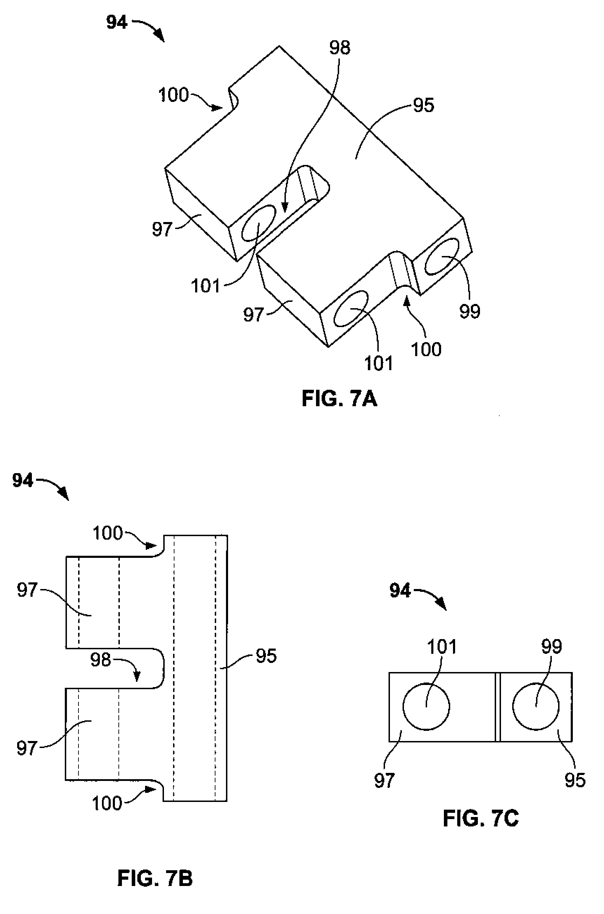

Still referring to **FIGS. 2****,** **5** and **6****,** in an embodiment, the handle **14** includes a block **94** mounted between the opposing side members **62** thereof by rivets **96,** which are received by the apertures **70** of the handle **14** (the apertures **70** being shown in **FIG. 4****).** Referring to **FIGS. 7A** through **7C****,** in an embodiment, the block **94** includes a base portion **95** and two legs **97** extending from the base portion **95** and separated by a central slot **98.** In an embodiment, a pair of side slots **100** flank the legs **97.** In an embodiment, the base portion **95** includes an aperture **99** extending therethrough, and each of the legs **97** include an aperture **101** extending therethrough, respectively.

Referring back to **FIGS. 2** and **5****-6**, in an embodiment, the pin latch **10** includes an elongated link **102** having a first end **104,** a second end **106** opposite the first end **104,** and an aperture **108** positioned intermediate the first and second ends **102**, **104.** In an embodiment, the pin latch **10** includes a shear pin **110** having a free first end **112** and a second end **114** opposite the first end **112.** In an embodiment, the first end **104** of the link **102** is received within the central slot **98** of the block **94** (the central slot **98** being shown in **FIGS. 7A** and **7B****)** and is attached pivotally to the block **94** by a central pivot pin **116.** In an embodiment, the second end **106** of the link **102** is attached pivotally to the second end **114** of the shear pin **110.** In an embodiment, the shear pin **110** is received slidably within the trough **40** and the aperture **38** of the housing **12.** In an embodiment, the pin latch **10** includes a finger member **118** attached pivotally to the housing **12** and the handle **14.** The finger member **118** is described hereinbelow.

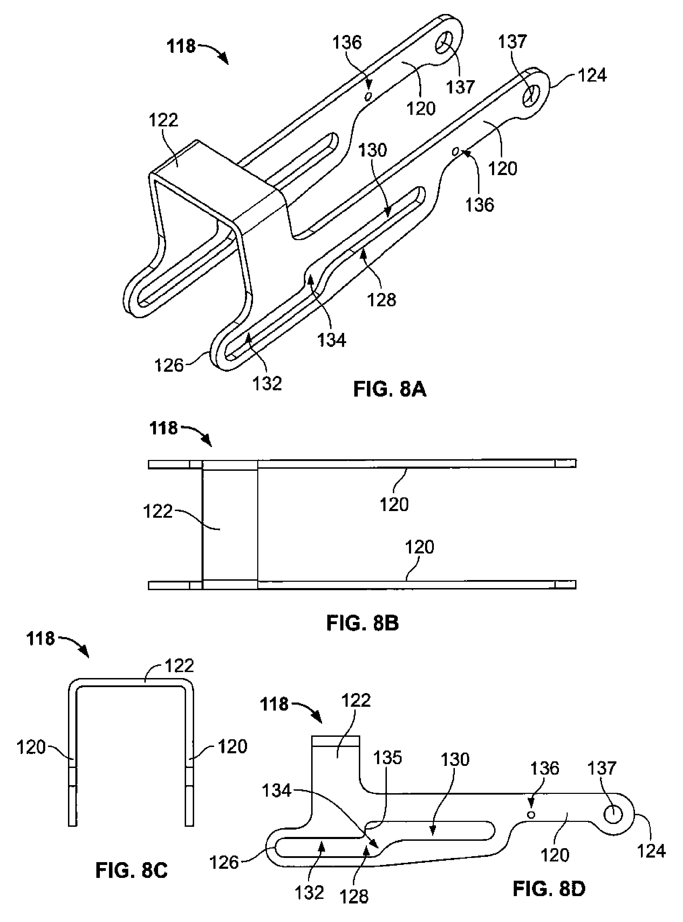

Referring to **FIGS. 8A** through **8D****,** in an embodiment, the finger member **118** includes a pair of opposed elongated side members **120** bridged by a U-shaped grasping member **122.** In an embodiment, each of the side members **120** includes a first end **124** and a second end **126** opposite the first end **124,** and a Z-shaped slot **128.** In an embodiment, each of the slots **128** is characterized by a first, upper slot portion **130,** a second, lower slot portion **132,** and a third slot portion **134** that connects the first upper and second, lower slot portions **130**, **132** and forms a stop **135** (see **FIG. 8D****).** In an embodiment, the third slot portion **134** is formed oblique relative to the slot portions **130, 132.** In an embodiment, the slot portions **130**, **132** are parallel to one another. In an embodiment, each of the side members **120** includes an aperture **136** positioned intermediate the first and second ends **124, 126**. Each of the first ends **124** of the side member **120** include an aperture **137.**

Referring back to **FIGS. 2** and **5****-6**, in an embodiment, the first ends **124** of the side members **120** of the finger member **118** are received within **the** side slots **100** of the block **94,** respectively, and are connected pivotally thereto by rivets **138** received within the apertures **68** of the handle **14** and the apertures **137** of the side members **120** of the finger member **118** (the apertures **137** being shown in **FIGS. 8A** and **8D****).** In an embodiment, each of the apertures **28** of the housing **12** (which are shown in **FIG. 3A****)** receives a trigger pin **140.** In an embodiment, the trigger pins **140** are received within the slots **128** of the side members **120.** In an embodiment, first finger extension springs **142** connect each of the side members **120** with the link **102,** such that one end of each of the first finger extension springs **142** is attached to the apertures **136** of the side members **120** and an opposite end of each of the springs **142** is attached to the aperture **108** of the link **102.** The purpose and function of the first and second finger extension springs **142** shall be described hereinafter.

In an embodiment, the housing **12** and the handle **14** are fabricated from stainless steel, but other suitable materials can be used. In an embodiment, all other structural elements depicted in the Figures may also be fabricated from suitable grade stainless steel or other suitable alloy metals.

Referring to **FIGS. 1** and **2****,** the pin latch **10** is shown in its closed position. While in the closed position, the handle **14** is retained within the channel **24** of the housing **12,** with the exterior surface **58** of the handle **14** being flush or substantially flush with the upper end **20** of the housing **12.** In an embodiment, the exterior surface **58** of the handle is flush or substantially flush with the exterior surface of the external structure to which the pin latch **10** is attached (not shown in the Figures). As shown in **FIGS. 1** and **2****,** the shear pin **110** is in its fully extended position, i.e., the first end **112** of the shear pin **110** is positioned at a maximum distance from the housing **12.** The shear pin **110** is sized and shaped to engage an external structure (not shown in the Figures). In addition, the trigger **78** engages the trigger pin **140** such that trigger pins **140** engage the slots **88** of the detents **84.** In an embodiment, the trigger **78** is spring-loaded via the trigger spring **90.** In an embodiment, the finger extension springs **142** are in a relaxed state: that is, a state in which the springs **142** are neither tensioned, nor compressed, nor torqued (e.g., twisted).

Referring to **FIGS. 5** and **6****,** in an embodiment, the pin latch **10** is opened by pressing the trigger **78,** wherein the tips **86** of the trigger **78** are released from the trigger pins **140,** and the trigger pins **140** disengage the slots **88** of the trigger **78,** freeing the handle **14** to be rotated outwardly in direction **D1** from the exterior surface of the structure (not shown in the Figures). In an embodiment, when the trigger **78** is pushed, the handle **14** automatically and freely opens via the back spring **76.** In an embodiment, when the handle **14** is rotated in this manner, the link **102** is pulled and, in turn, the shear pin **110** retracts into the housing **12.** Simultaneously, the first ends **124** of the side members **120** of the finger member **118** pivot about the rivets **138** which are fixed in the block **94,** while the trigger pins **140** guide the second ends **126** of the side members **120** via the slots **128.** More particularly, in an embodiment, the trigger pins **140** glide within the first, upper slot portions **130,** until they reach the third, oblique slot portions **134** and engage the stops **135,** respectively. The shear pin **110** then stops and the handle **14** is retained in place in the intermediate position, as shown in **FIGS. 5** and **6**. Moreover, in an embodiment, the finger extension springs **142** extend and pull the side members **120** of the finger member **118** and the link **102** towards one another in a scissor-like action. In an embodiment, the springs **142** are under tension load in order to retain the handle **14** in its intermediate position. In an embodiment, in order to further retract the shear pin **110,** the finger member **118** is manually lifted up by the grasping member **122** in order to disengage the trigger pins **140** from the third slot portions **134** of the finger member **118** and clear the stops **135.** Referring to **FIGS. 9** and **10****,** in an embodiment, lifting the finger member **118** in the foregoing manner allows the trigger pins **140** to engage the second, lower slot portions **132** of the finger member **118.** As a result, the handle **14** may then be further rotated in direction **D1** until the second end **56** of the handle **14** engages the crossbar **48** of the housing **12** (see **FIG. 10**). At this point, the handle **14** is in the open position and the shear pin **110** is fully retracted within the housing **12,** as shown in **FIGS. 9** and **10**. Moreover, the finger extension springs **142** extend further and continue to remain under a tension load.

In order to close the handle **14** from the open position to the closed position, the handle **14** is rotated in an opposite direction **D2** towards the closed position (see **FIG. 9**). In this regard, the handle **14** pushes the link **102** to extract the shear pin **110** until the trigger **78** engages the trigger pins **140** and the handle **14** is retained within the channel **24** of the housing **12** (see **FIGS. 1** and **2**). Simultaneously, the trigger pins **140** slide through the second, lower horizontal slot portions **132,** respectively, and then through the first, upper horizontal slot portions **130,** respectively, of the finger member **118**. Also, the finger extension springs **142** are brought back to a relaxed state.

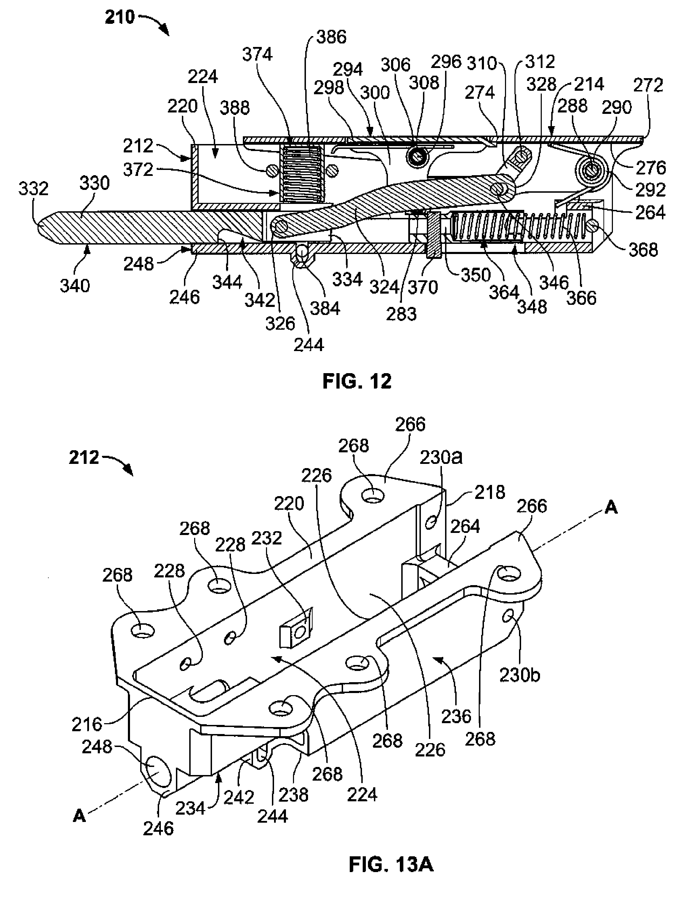

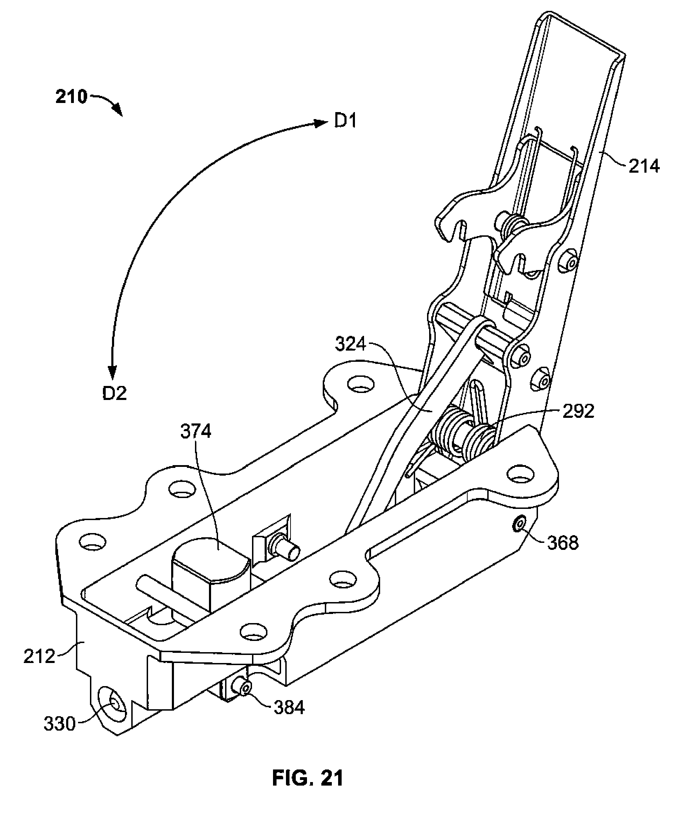

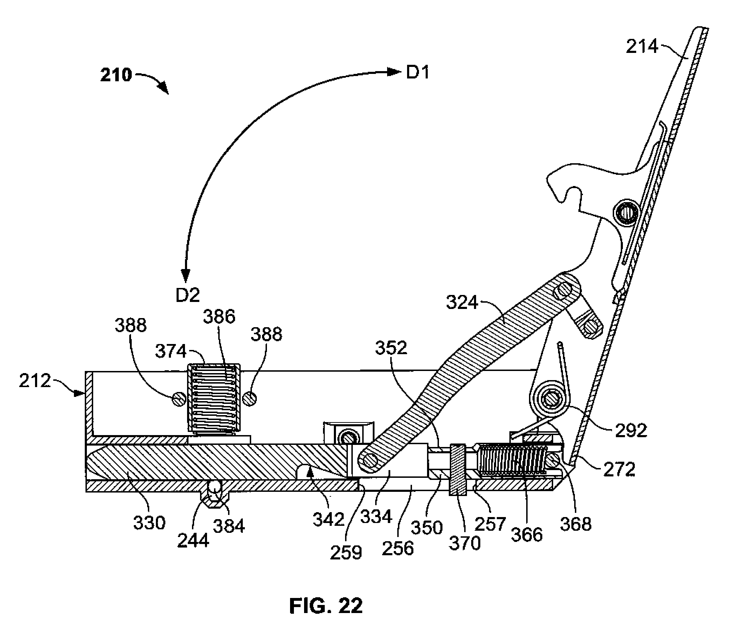

Referring to **FIGS. 11** and **12**, according to the invention, a pin latch **210** includes a housing **212** and a handle **214** attached pivotally to the housing **212**. The handle **214** pivots relative to the housing **212** between a closed position, in which the handle **214** is releasably retained within the housing **212** (see **FIGS. 11** and **12**), and an open position, in which the handle **214** fully extends from the housing **212** (see **FIGS. 21** and **22****).** The handle **214** can be automatically set in an intermediate position, whereby the handle **214** is releasably retained in a position that is between its open and closed positions (see **FIGS**. **15** and **16****).** The structure and function of the housing **212** and the handle **214** shall be described in further detail.

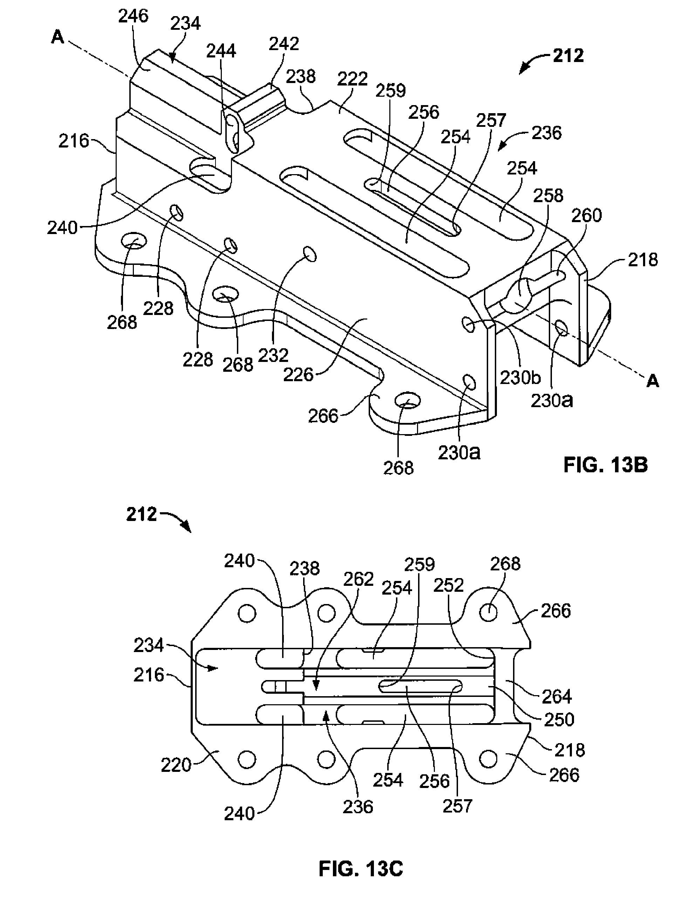

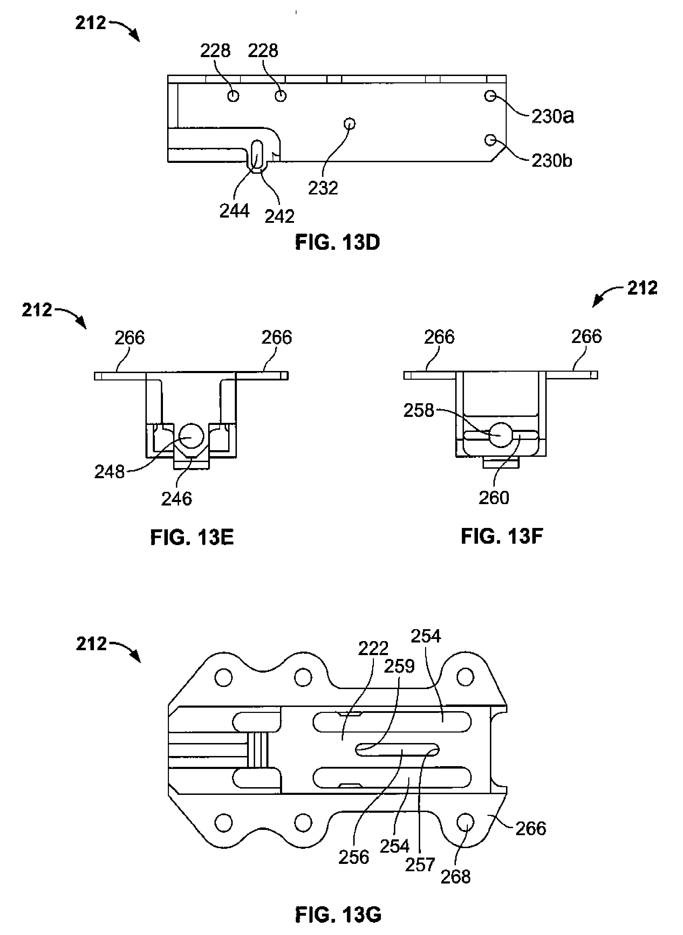

Referring to **FIGS. 13A** through **13G****,** the housing **212** includes a first end **216** a second end **218** opposite the first end **216**, an upper end **220,** and a lower end **222** opposite the upper end **220.** In an embodiment, a channel **224** extends from the first end **216** to the second end **218,** and is disposed between a pair of sidewalls **226.** In an embodiment, the channel **224** is closed off at the first end **216** of the housing **212** and open at the second end **218** of the housing **212.** In an embodiment, each of the sidewalls **226** includes a pair of horizontally aligned apertures **228** positioned proximate to the first end **216**, a pair of apertures **230a** positioned proximate to the second end **218** and the upper end **220**, and an aperture **232** positioned intermediate the first and second ends **216, 218.** In an embodiment, one of the sidewalls **226** includes an aperture **230b** positioned proximate to the lower end **222** and spaced apart from the aperture **230a** formed within such sidewall **226.** In an embodiment, the housing **212** includes a first portion **234** and a second portion **236,** which define the channel **224.** In an embodiment, the first portion **234** extends from the first end **216** to an end **238.** In an embodiment, the first portion **234** includes a pair of slots **240** formed adjacent the sidewalls **226**. In an embodiment, the first portion **234** includes a cross-pin housing **242** containing an elongated slot **244**, and a shear pin housing **246** containing an aperture **248** (see **FIG. 13A****)** that extends axially from the first end **216** to the end **238** along a longitudinal axis **A-A**.

Still referring to **FIGS. 13A** through **13G**, in an embodiment, the second portion **236** includes a semi-tubular-shaped trough **250** (see **FIG. 13C****)** that extends from the end **238** of the first portion **234** to an end **252** intermediate the first and second ends **216, 218.** In an embodiment, the trough **250** is integrally connected with the end **238** of the first portion **234.** In an embodiment, a pair of elongated slots **254** flank the trough **250,** while an elongated central slot **256** is formed in the trough **250** and positioned intermediate the slots **254.** In an embodiment, the central slot **256** includes a first end **257** and a second end **259** opposite the first end **257.** In an embodiment, a circular-shaped aperture **258** and an overlapping, elongated horizontal slot **260** is formed in the end **252** of the second portion **236.** In an embodiment, the trough **250** has an interior portion **262** that is aligned axially with the aperture **248** of the first portion **234** and the aperture **258** of the second portion **236.** In an embodiment, a crossbar **264** extends between the sidewalls **226** proximate to the second end **218.**

Still referring to **FIGS. 13A** through **13G****,** in an embodiment, a pair of mounting brackets **266** extends outwardly from the upper end **220** of the housing **212** perpendicular to the sidewalls **226,** and longitudinally from the first and second ends **214, 296**. In an embodiment, the mounting brackets **266** enable the pin latch **210** to be mounted to an external structure. In this **regard,** and in an embodiment, each of the brackets **266** includes a plurality of apertures **268** that are sized and shaped to receive mounting hardware, such as fasteners (e.g., bolts, screws, rivets, etc.), for fastening the pin latch **210** to the external structure (not shown in the Figures).

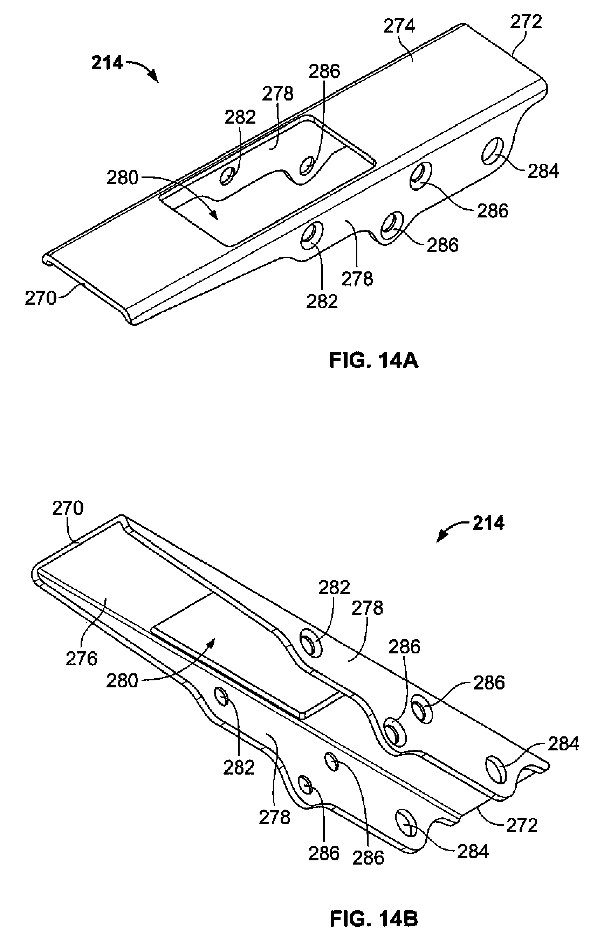

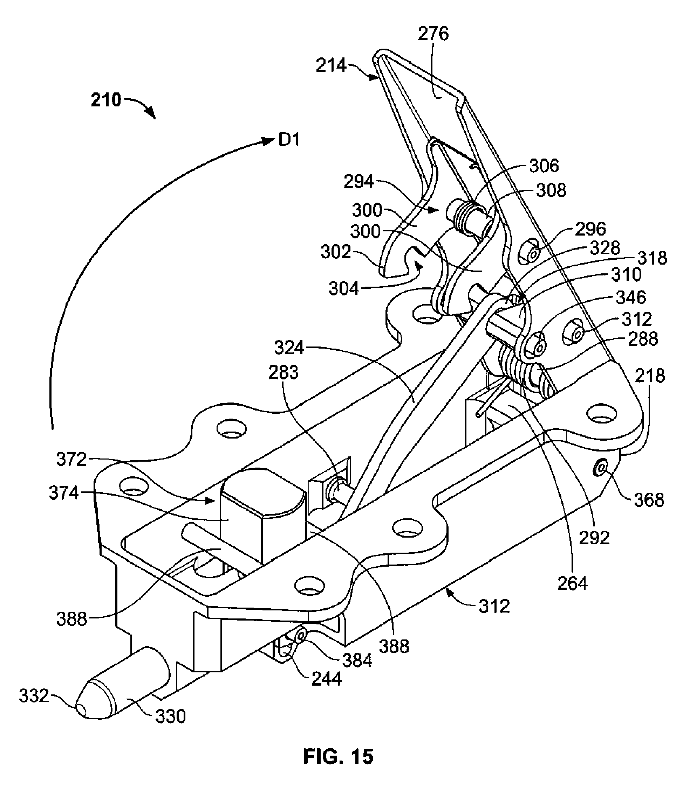

Referring to **FIGS. 14A** and **14B**, in an embodiment, the handle **214** includes a first end **270** and a second end **272** opposite the first end **270,** an exterior surface **274,** an interior surface **276,** and opposing side members **278.** In an embodiment, the handle **214** includes a rectangular-shaped aperture **280** extending from the exterior surface **274** to the interior surface **276.** In an embodiment, each of the opposing side members **278 includes** a trigger pin aperture **282** positioned at one end thereof, a pivot pin aperture **284** positioned at an opposite end thereof, and a pair of mounting block apertures **286** positioned intermediate the apertures **280, 282.** In an embodiment, each of the trigger pin apertures **232** of the housing **212** receives a trigger pin **283** (see **FIG. 15**), whose purpose shall be described hereinafter.

Referring to **FIGS. 12****,** **15** and **16****,** in an embodiment, the second end **272** of the handle **214** is attached pivotally to the second end **218** of the housing **212** by a handle pivot pin **288** that extends through the pivot pin apertures **284** of the opposing side members **278** of the handle **214** (the pivot pin apertures **284** being shown in **FIGS. 14A** and **14B****).** In an embodiment, the handle pivot pin **288** includes bushings **290**. In an embodiment, a back spring **292** surrounds the handle pivot pin **288** and engages the crossbar **264** of the housing **212** and the interior surface **276** of the handle **214** in order to maintain it in its intermediate and open positions, which will be described in greater detail below.

Still referring to **FIGS. 12****,** **15** and **16****,** in an embodiment, the handle **214** includes a trigger **294** mounted pivotally therein by a pair of trigger pivot pins **296,** which are fitted within the trigger pin apertures **282** of the opposing side members **278** of the handle **214** (the trigger pin apertures **282** being shown in **FIGS. 14A** and **14B**). In an embodiment, the trigger **294** includes a rectangular-shaped top portion **298** that is sized and shaped to mate with the aperture **280** of the handle **214,** and a pair of opposing detents **300,** each having a cupped tip **302** and a slot **304** (see **FIG. 15**), and depending from the top portion **298** of the trigger **294.** In an embodiment, the trigger **294** includes a trigger spring **306** mounted to the trigger pivot pins **296** by trigger bushings **308.**

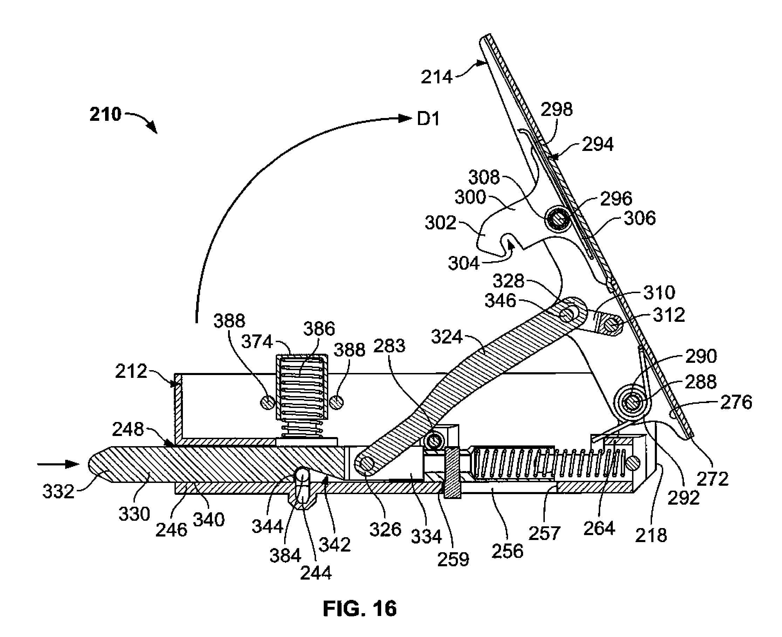

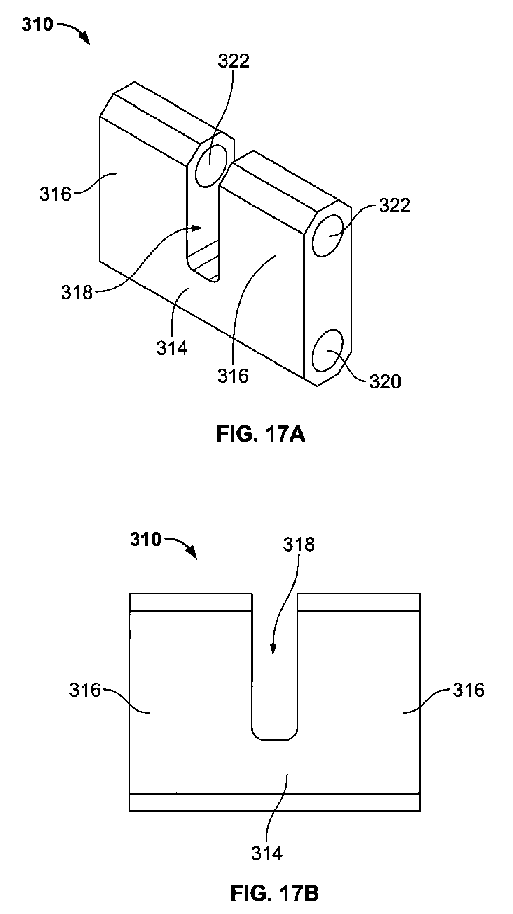

Referring to **FIGS. 15** and **16****,** in an embodiment, the handle **214** includes a block **310** mounted between the opposing side members **278** of the handle **214** by rivets **312,** which are received by the apertures **286a.** Referring to **FIGS. 17A** and **17B****,** in an embodiment, the block **310** includes a base portion **314** and two legs **316** extending from the base portion **314** and separated by a central slot **318.** In an embodiment, the base portion **314** includes an aperture **320** extending therethrough, and each of the legs **316** include an aperture **322** extending therethrough, respectively (see **FIG. 17A**).

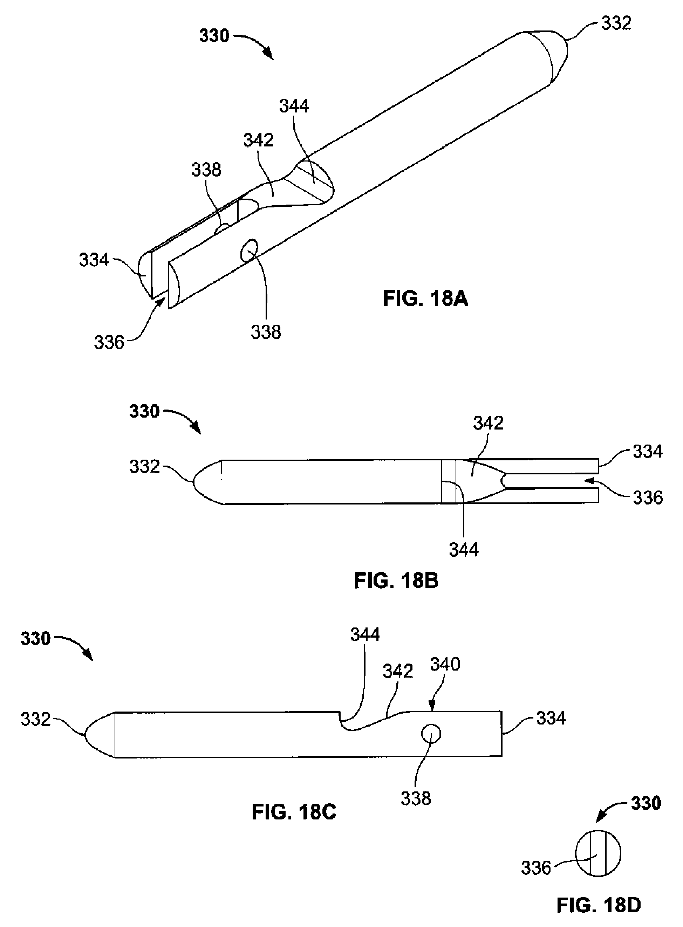

Referring back to **FIGS. 15** and **16****,** in an embodiment, the pin latch **210** includes an elongated link **324** having a first end **326** and a second end **328** opposite the first end **326.** Referring to **FIGS. 15****,** **16****,** and **18A** through **18D**, in an embodiment, the pin latch **210** includes a shear pin **330** having a free first end **332,** a second end **334** opposite the first end **332,** and a first slot **336** formed axially within the second end **334.** In an embodiment, each of a pair of apertures **338** is formed transversely within the shear pin **330** proximate to the second end **334.** In an embodiment, a bottom edge **340** of the shear pin **330** includes a curved slot **342** terminating at a stop **344.** The purpose and function of the slot **342** and the stop **344** shall be described hereinafter. Referring specifically to **FIG. 15****,** in an embodiment, the second end **328** of the link **324** is received within the central slot **318** of the block **310** and is attached pivotally to the block **310** by a central pivot pin **346.** In an embodiment, the first end **326** of the link **324** is attached pivotally to the second end **328** of the shear pin **330.** In an embodiment, the shear pin **330** is received slidably within the trough **250** of the housing **212** and through the aperture **248** of the shear pin housing **246** of the housing **212.**

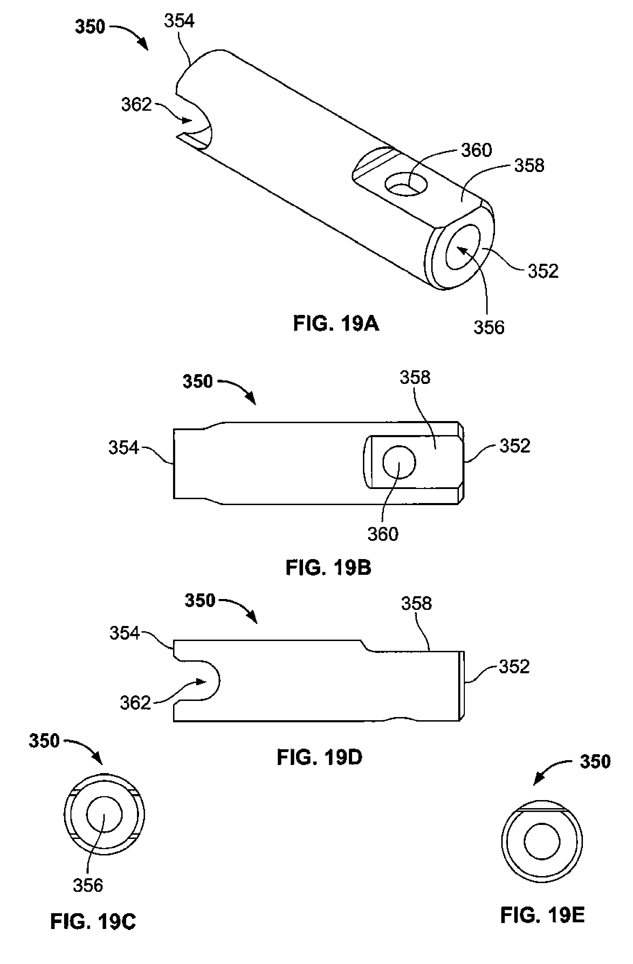

Referring to **FIGS. 12** and **19A** through **19E,** in an embodiment, a plunger mechanism **348** includes a cylindrical-shaped plunger **350** having a first end **352** and a second end **354** opposite the first end **352,** an first aperture **356** extending axially from the first end **352** to the second end **354,** a flat edge **358** formed proximate to the first end **352,** a second aperture **360** formed transversely through the plunger **350** proximate to the second end **354** thereof, and a U-shaped slot **362** formed within the first end **352.** In an embodiment, an interior **364** of the plunger **350** is sized and shaped to house a plunger spring **366** (i.e., a compression spring), one end of which engages a rivet **368** that is inserted within the aperture **230b** of the housing **212** (see **FIG. 12**). In an embodiment, a stop pin **370** is positioned within the second apertures **360** of the plunger **350** (see **FIG. 12**). As to be described in more detail below, in an embodiment, the plunger **350** is guided in the housing **212** and limited in axial travel by the stop pin **370,** which engages and is guided in the central slot **256** of the housing **212.**

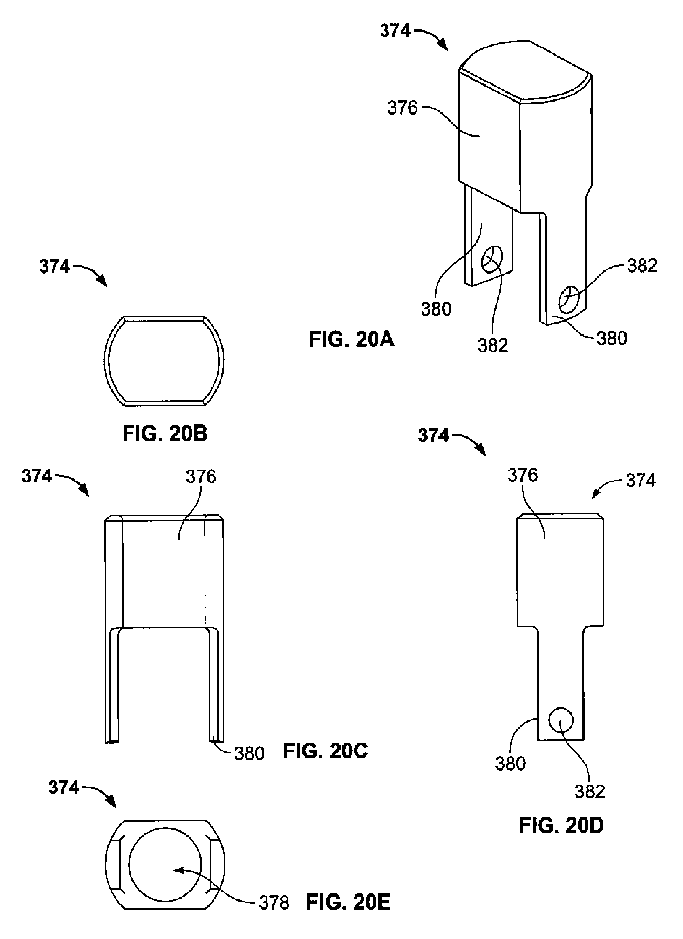

Referring to **FIGS. 12** and **20A** through **20E,** in an embodiment, a button mechanism **372** includes a button **374** having a base **376** with a hollow interior portion **378** and a pair of legs **380** extending from the base **376,** each of the legs **380** being parallel to one another. In an embodiment, each of the legs **380** includes an aperture **382** that is sized and shaped to receive a cross pin **384,** which also extends through the slot **244** of the housing **212** (see **FIG. 12**)**.** In an embodiment, a button spring **386** (i.e., compression spring) is nested within the interior portion **378** of the base **376** of the button **374** and against the housing **212** (see **FIG. 12****).** As to be described in more detail below, in an embodiment, the button **374** is guided by a pair of rivets **388** inserted through the apertures **228** of the housing **312,** and is limited in travel by the cross pin **384.**

In an embodiment, the housing **212** and the handle **214** are fabricated from stainless steel, but other suitable materials can be used. In an embodiment, all other structural elements depicted in the Figures may also be fabricated from suitable grade stainless steel or other suitable alloy metal.

Referring to **FIGS. 11** and **12****,** the pin latch **210** is shown in its closed position. While in the closed position, the handle **214** is retained within the channel **224** of the housing **212,** with the exterior surface **274** of the handle **214** being flush or substantially flush with the upper end **220** of the housing **212.** In an embodiment, the exterior surface **274** of the handle is flush or substantially flush with the exterior surface of the external structure to which the pin latch **210** is attached (not shown in the Figures). As shown in **FIGS. 11** and **12****,** the shear pin **330** is in its fully extended position, i.e., the first end **332** of the shear pin **330** is positioned at a maximum distance from the housing **212.** The shear pin **330** is sized and shaped to engage the external structure (not shown in the Figures). In an embodiment, the trigger **294** engages the trigger pins **283** such that trigger pins **283** engage the slots **304** of the detents **300.** In an embodiment, the trigger **294** is spring-loaded via the trigger spring **306**. In addition, in an embodiment, while the pin latch **210** is in its closed position, the interior surface **276** of the handle **214** engages the button **374** so that it is maintained in a depressed position, the button spring **386** is in a compressed position, and the cross pin **384** is disengaged from the shear pin **330.** In an embodiment, the plunger **350** is set in an extended position, while the associated plunger spring **366** is in a relaxed state: that is, it is neither tensioned nor compressed.

Referring to **FIGS. 15** and **16****,** in an embodiment, the pin latch **210** is opened to its intermediate position by pressing the trigger **294,** wherein the tips **302** of the trigger **294** are released from the trigger pins **283** and the trigger pins **283** disengage the slots **304**, freeing the handle **214** to rotate outwardly in direction **D1** from the exterior surface of the structure. In an embodiment, when the trigger **294** is pushed, the handle **214** automatically and freely opens via the back spring **292.** In an embodiment, when the handle **214** is rotated in this manner, the link **324** is pulled and, in turn, the shear pin **330** retracts into the housing **212.** Simultaneously, in an embodiment, the button spring **386** expands, causing the button **374** to lift to a raised or elevated position. In addition, in an embodiment, the cross pin **384** travels within the slot **244** of the housing **212** and glides against the bottom edge **340** of the shear pin **330.** In an embodiment, the cross pin **384** reaches and falls into the slot **342** of the shear pin **330** and travels within the slot **384** until it engages the stop **344.** At this point, in an embodiment, retraction of the shear pin **330** stops and the pin latch **210** is set in its intermediate position.

Referring to **FIGS. 21** and **22****,** in an embodiment, to further retract the shear pin **330,** the button **374** is pushed (i.e., depressed) from its raised position in order to disengage the cross pin **384** from the slot **342** of the shear pin **330,** and, simultaneously, the handle **214** is rotated further outward towards the open position in direction **D1**. During this sequence, in an embodiment, the link **324** further retracts the shear pin **330,** and the second end **334** of the shear pin **330** pushes the first end **352** of the plunger **350** and compresses the plunger spring **366** until the second end **272** of the handle **214** engages the rivet **368** (see **FIG. 22****).** In an embodiment, the stop pin **370** is urged to travel through the central slot **256** of the housing **212** until it stops against the end **257** of the central slot **256.** At this point, in an embodiment, the handle **214** is in the open position and the shear pin **330** is fully retracted within the housing **212,** as shown in **FIGS. 21** and **22****.** In this open position, in an embodiment, the back spring **292** no longer provides a load in the handle **214,** but the plunger spring **366** maintains a load thereon. In an embodiment, the slot **362** of the plunger **350** provides for clearance over the rivet **368.** In this regard, in an embodiment, the handle **214** is manually held in the open position in order to maintain the shear pin **330** in its fully retracted position. In an embodiment, once the handle **214** is manually released, the pin latch **210** automatically returns to its intermediate position, as shown in **FIGS. 15** and **16****.** In this regard, in an embodiment, the plunger spring **366** expands, causing the plunger **350** to push the shear pin **330** until the stop pin **370** stops against the second end **259** of the central slot **256** of the housing **212.** In turn, the handle **214** rotates in direction **D2.** In an embodiment, the cross pin **384** then falls into the slot **342** of the shear pin **330,** and the extension of the shear pin **330** stops in this intermediate position, as shown in **FIGS. 15** and **16**.

In an embodiment, in order to close the handle **214** from the intermediate position to the closed position, the handle **214** is rotated in direction **D2** towards the closed position. In this regard, in an embodiment, the handle **214** pushes the link **324** to extract the shear pin **330** further, and the cross pin **384** glides on the bottom edge **340** of the shear pin **330** until the trigger **294** engages the trigger pins **283** and the handle **214** is retained within the channel **224** of the housing **212** (see **FIGS. 21** and **22**). The pin latch **210** is then latched in its closed position.

It will be understood that the embodiments described herein are merely exemplary and that a person skilled in the art may make many variations and modifications without departing from the spirit and scope of the invention as defined in the appended claims. For instance, in certain embodiments, the pin latches **10, 210** may be used for doors and access panels for aircraft, such as fuselages, nacelles, engine cowlings, radomes, etc. In other embodiments, the pin latches **10, 210** can be used in other suitable environments and for other vehicles and structures. In other embodiments, each of the pin latches **10**, **210** can be configured as a pin latch or other suitable latch, such as a hook latch. All such variations and modifications are intended to be included within the scope of the invention as defined in the appended claims.

## Claims

1. A pin latch (10, 210), comprising:
- a housing (12, 212) having at least one pin (140, 283);
- a handle (14, 214) attached pivotally to the housing (12, 212); and
- a shear pin (110, 330) housed slidably within the housing (12, 212) and connected to the handle (14, 214),
wherein the handle (14, 214) is moveable between a closed position, in which the handle (14, 214) is retained releasably within the housing (12, 212) and the shear pin (110, 330) is extended from the housing (12, 212), and an open position, in which the handle (14, 214) is retracted from the housing (12, 212) and the shear pin (110, 330) is retracted within the housing (12, 212),
and wherein the handle (14, 214) is further moveable to an intermediate position, in which the handle (14, 214) is retained releasably in a position between its closed position and its open position,
**characterized**
**in that** the pin latch (10) further comprises a finger member (118) connected to the handle (14) and to the housing (12), the finger member (118) including at least one slot (128) that is sized and shaped to receive slidably the at least one pin (140) of the housing (12), the at least one slot (128) including a first slot portion (130), a second slot portion (132), and a third slot portion (134) that bridges the first and second slot portions (130, 132) with one another, the third slot portion (134) forming a stop (135) located between the first and second slot portions (130, 132),
such that when the handle (14) is moved from its closed position to its intermediate position, the at least one pin (140) of the housing (12) travels within the first slot portion (130) of the finger member (118) and engages the stop (135) of the finger member (118) in order to retain releasably the handle (14) in its intermediate position, and wherein the finger member (118) is moveable from an engaged position, in which the at least one pin (140) of the housing (12) engages the stop (135) of the finger member (118), and a disengaged position, in which the at least one pin (140) of the housing (12) is disengaged from the stop (135) and is adapted to travel within the second slot portion (132) of the finger member (118) so as to enable the handle (14) to be moved from its intermediate position to its open position;
or
**in that** the shear pin (330) includes a slot (342) and a stop (344) located at one end of the slot (342), and wherein the pin latch (210) further comprises a button mechanism (372) including a cross-pin (384), wherein when the handle (214) is in its closed position, the button mechanism (372) is in a depressed position such that the cross-pin (384) of the button mechanism (372) is disengaged from the slot (342) of the shear pin (330),
wherein when the handle (214) is moved from its closed position to its intermediate position, the button mechanism (372) is moved from its depressed position to a raised position, and the shear pin (330) retracts into the housing (212) such that the cross-pin (384) of the button mechanism (372) engages the slot (342) of the shear pin (330) and glides therein until the cross-pin (384) engages the stop (344) of the shear pin (330).

2. The pin latch (10) of Claim 1, wherein the finger member (118) includes at least one side member (120) having a first end (124) and a second end (126) opposite the first end, and wherein the at least one slot (128) of the finger member (118) is formed within the at least one side member (120).

3. The pin latch (10) of Claim 2, wherein the at least one side member (120) of the finger member (118) includes a pair of side members, and the at least one pin (140) of the housing (12) includes a pair of pins (140), and wherein the slot (128) of one of the side members (120) is sized and shaped to receive slidably one of the pins (140) of the housing (12), and the slot (128) of the other of the side members is sized and shaped to receive slidably the other of the pins (140) of the housing (12).

4. The pin latch (10) of Claim 3, wherein the finger member (118) includes a grasping member (122) that bridges the pair of side members (120), and wherein the grasping member (122) facilitates the movement of the finger member (118) from its engaged position to its disengaged position.

5. The pin latch (10) of Claim 4, wherein the first slot portion (130) of the slot (128) of one of the side members (120) of the finger member (118) is formed parallel to the second slot portion (132) thereof, and the first slot portion (130) of the other of the side members (120) of the finger member (118) is formed parallel to the second slot portion (132) thereof.

6. The pin latch (10) of Claim 5, wherein the third slot portion (134) of the slot (128) of one of the side members (120) of the finger member (118) is positioned obliquely relative to the first and second slot portions (130, 132) thereof, and the third slot portion (134) of the slot (128) of the other of the side members (120) of the finger member (118) is positioned obliquely relative to the first and second slot portions (130, 132) thereof.

7. The pin latch (10) of any of the preceding Claims, further comprising a link (102) having a first end (106) and a second end (104) opposite the first end of the link (102), the first end (106) of the link being attached pivotally to the handle (14) and the second end (104) of the link being attached to the shear pin (110).

8. The pin latch (10) of Claim 7, further comprising at least one finger extension spring (142) having a first end connected to one of the side members (120) of the finger member (118) and a second end opposite the first end of the at least one finger extension spring (142) connected to the link (102).

9. The pin latch (10) of Claim 8, wherein the at least one finger extension spring (142) includes a pair of finger extension springs (142), one of which is connected to one of the pair of side members (120) and to the link (102), and the other of which is connected to the other of the pair of side members (120) and to the link (102).

10. The pin latch (10) of any of Claims 2 to 6, wherein the handle (14) includes a block (94), wherein the first end (106) of the link (102) is attached pivotally to the block (94) and the first ends (124) of the side members (120) of the finger members (118) are attached pivotally to the block (94).

11. The pin latch (10) of any of the preceding Claims, wherein the handle (14, 214) includes a trigger (78, 294) that is releasably engageable with the at least one pin (140, 283) of the housing (12, 212) when the handle (14, 214) is in its closed position.

12. The pin latch (10) of any of the preceding Claims, wherein the handle (14, 214) includes a back spring (76, 292).

13. The pin latch (10) of any of the preceding Claims, wherein the housing (12, 212) includes a first end (16, 216), a second end (18, 218) opposite the first end (16, 216) of the housing (12, 212), and an aperture (38, 248) formed within the first end (16, 216) of the housing (12, 212), and wherein the shear pin (110, 330) is sized and shaped to slide within the aperture (38, 248).

## Patentansprüche

1. Stiftverriegelung (10, 210), welche Folgendes aufweist:
- ein Gehäuse (12, 212), welches mindestens einen Stift (140, 283) aufweist;
- einen Griff (14, 214), welcher drehbar an dem Gehäuse (12, 212) angebracht ist; und
- einen Scherstift (110, 330), welcher verschiebbar innerhalb des Gehäuses (12, 212) aufgenommen ist und mit dem Griff (14, 214) verbunden ist,
wobei der Griff (14, 214) zwischen einer geschlossenen Stellung, in welcher der Griff (14, 214) lösbar innerhalb des Gehäuses (12, 212) gehalten wird und der Scherstift (110, 330) sich von dem Gehäuse (12, 212) erstreckt, und einer offenen Stellung bewegbar ist, in welcher der Griff (14, 214) von dem Gehäuse (12, 212) zurückgezogen ist und der Scherstift (110, 330) innerhalb des Gehäuses (12, 212) zurückgezogen ist, und wobei der Griff (14, 214) ferner in eine Zwischenstellung bewegbar ist, in welcher der Griff (14, 214) lösbar in einer Stellung zwischen seiner geschlossenen Stellung und seiner offenen Stellung gehalten wird,
**dadurch gekennzeichnet,**
**dass** die Stiftverriegelung (10) ferner ein Fingerelement (118) aufweist, welches mit dem Griff (14) und dem Gehäuse (12) verbunden ist, wobei das Fingerelement (118) mindestens einen ersten Schlitz (128) aufweist, welcher in Größe und Form ausgebildet ist, um den mindestens einen Stift (140) des Gehäuses (12) verschiebbar aufzunehmen, wobei der mindestens eine Schlitz (128) einen ersten Schlitzbereich (130), einen zweiten Schlitzbereich (132) und einen dritten Schlitzbereich (134) aufweist, welcher den ersten und zweiten Schlitzbereich (130, 132) miteinander verbindet, wobei der dritte Schlitzbereich (134) einen Anschlag (135) ausbildet, welcher zwischen dem ersten und dem zweiten Schlitzbereich (130, 132) derart angeordnet ist, dass, wenn der Griff (14) von seiner geschlossenen Stellung in seine Zwischenstellung bewegt wird, der mindestens eine Stift (140) des Gehäuses (12) sich innerhalb des ersten Schlitzbereichs (130) des Fingerelements (118) bewegt und mit dem Anschlag (135) des Fingerelements (118) in Eingriff kommt, um den Griff (14) lösbar in seiner Zwischenstellung zu halten, und wobei das Fingerelement (118) von einer eingegriffenen Stellung, in welcher der mindestens eine Stift (140) des Gehäuses (12) mit dem Anschlag (135) des Fingerelements (118) in Eingriff kommt, und einer nicht-eingegriffenen Stellung bewegbar ist, in welcher der mindestens eine Stift (140) des Gehäuses (12) von dem Anschlag (135) außer Eingriff gebracht ist und ausgebildet ist, um sich innerhalb des zweiten Schlitzbereichs (132) des Fingerelements (118) derart zu bewegen, um es dem Griff (14) zu ermöglichen, von seiner Zwischenstellung in seine offene Stellung bewegt zu werden;
oder dass der Scherstift (330) einen Schlitz (342) und einen Anschlag (344) aufweist, welcher an einem Ende des Schlitzes (342) angeordnet ist, und wobei die Stiftverriegelung (210) ferner einen Knopfmechanismus (372) aufweist, welcher einen Querstift (384) aufweist, wobei, wenn der Griff (214) sich in seiner geschlossenen Stellung befindet, der Knopfmechanismus (372) derart in einer gedrückten Stellung ist, dass der Querstift (384) des Knopfmechanismus (372) von dem Schlitz (342) des Scherstifts (330) außer Eingriff gebracht ist,
wobei, wenn der Griff (214) von seiner geschlossenen Stellung in seine Zwischenstellung bewegt wird, der Knopfmechanismus (372) von seiner gedrückten Stellung in eine erhöhte Stellung bewegt wird, und der Scherstift (330) sich derart in das Gehäuse (212) zurückzieht, dass der Querstift (384) des Knopfmechanismus (372) mit dem Schlitz (342) des Scherstifts (330) in Eingriff kommt und darin gleitet bis der Querstift (384) mit dem Anschlag (344) des Scherstifts (330) in Eingriff kommt.

2. Stiftverriegelung (10) nach Anspruch 1,
wobei das Fingerelement (118) mindestens ein Seitenelement (120) aufweist, welches ein erstes Ende (124) und ein dem ersten Ende gegenüberliegendes zweites Ende (126) aufweist, und wobei der mindestens eine Schlitz (128) des Fingerelements (118) innerhalb des mindestens einen Seitenelements (120) ausgebildet ist.

3. Stiftverriegelung (10) nach Anspruch 2,
wobei das mindestens eine Seitenelement (120) des Fingerelements (118) ein Paar Seitenelemente aufweist, und wobei der mindestens eine Stift (140) des Gehäuses (12) ein Paar Stifte (140) aufweist, und wobei der Schlitz (128) von einem der Seitenelemente (120) in Größe und Form ausgebildet ist, um einen der Stifte (140) des Gehäuses (12) verschiebbar aufzunehmen, und wobei der Schlitz (128) des anderen der Seitenelemente in Größe und Form ausgebildet ist, um den anderen der Stifte (140) des Gehäuses (12) verschiebbar aufzunehmen.

4. Stiftverriegelung (10) nach Anspruch 3,
wobei das Fingerelement (118) ein Greifelement (122) aufweist, welches das Paar Seitenelemente (120) verbindet, und wobei das Greifelement (122) die Bewegung des Fingerelements (118) von seiner eingreifenden Stellung in seine nicht-eingreifende Stellung erleichtert.

5. Stiftverriegelung (10) nach Anspruch 4,
wobei der erste Schlitzbereich (130) des Schlitzes (128) von einem der Seitenelemente (120) des Fingerelements (118) parallel zu dem zweiten Schlitzbereich (132) hiervon ausgebildet ist, und wobei der erste Schlitzbereich (130) von dem anderen der Seitenelemente (120) des Fingerelements (118) parallel zu dem zweiten Schlitzbereich (132) hiervon ausgebildet ist.

6. Stiftverriegelung (10) nach Anspruch 5,
wobei der dritte Schlitzbereich (134) des Schlitzes (128) von einem der Seitenelemente (120) des Fingerelements (118) bezogen auf den ersten und zweiten Schlitzbereich (130, 132) hiervon schräg angeordnet ist, und wobei der dritte Schlitzbereich (134) des Schlitzes (128) des anderen der Seitenelemente (120) des Fingerelements (118) bezogen auf den ersten und zweiten Schlitzbereich (130, 132) hiervon schräg angeordnet ist.

7. Stiftverriegelung (10) nach einem der vorhergehenden Ansprüche,
welche ferner ein Verbindungselement (102) aufweist, welches ein erstes Ende (106) und ein dem ersten Ende des Verbindungselements (102) gegenüberliegendes zweites Ende (104) aufweist, wobei das erste Ende (106) des Verbindungselements drehbar an dem Griff (14) angebracht ist und das zweite Ende (104) des Verbindungselements an dem Scherstift (110) angebracht ist.

8. Stiftverriegelung (10) nach Anspruch 7,
welche ferner mindestens eine Finger-Zugfeder (142) aufweist, welche ein erstes Ende, welches mit einem der Seitenelemente (120) des Fingerelements (118) verbunden ist, und ein zweites Ende aufweist, welches gegenüberliegend dem ersten Ende der mindestens einen Finger-Zugfeder (142) ausgebildet ist und welches mit dem Verbindungselement (102) verbunden ist.

9. Stiftverriegelung (10) nach Anspruch 8,
wobei die mindestens eine Finger-Zugfeder (142) ein Paar Finger-Zugfedern (142) aufweist, von denen eine mit einem Seitenelement (120) des Paars Seitenelemente (120) und dem Verbindungselement (102) verbunden ist, und von denen die andere mit dem anderen Seitenelement (120) des Paares Seitenelemente (120) und dem Verbindungselement (102) verbunden ist.

10. Stiftverriegelung (10) nach einem der Ansprüche 2 bis 6,
wobei der Griff (14) einen Klotz (94) aufweist, wobei das erste Ende (106) des Verbindungselements (102) drehbar an dem Klotz (94) angebracht ist und die ersten Enden (124) der Seitenelemente (120) der Fingerelemente (118) drehbar an dem Klotz (94) angebracht sind.

11. Stiftverriegelung (10) nach einem der vorhergehenden Ansprüche,
wobei der Griff (14, 214) einen Auslöser (78, 294) aufweist, welcher lösbar mit dem mindestens einen Stift (140, 283) des Gehäuses (12, 212) in Eingriff bringbar ist, wenn der Griff (14, 214) in seiner geschlossenen Stellung ist.

12. Stiftverriegelung (10) nach einem der vorhergehenden Ansprüche, wobei der Griff (14, 214) eine Rückfeder (76, 292) aufweist.

13. Stiftverriegelung (10) nach einem der vorhergehenden Ansprüche, wobei das Gehäuse (12, 212) ein erstes Ende (16, 216), ein dem ersten Ende (16, 216) des Gehäuses (12, 212) gegenüberliegendes zweites Ende (18, 218), und eine Öffnung (38, 248) aufweist, welche innerhalb des ersten Endes (16, 216) des Gehäuses (12, 212) ausgebildet ist, und wobei der Scherstift (110, 330) in Größe und Form ausgebildet ist, um sich innerhalb der Öffnung (38, 248) zu verschieben.

## Revendications

1. Verrou à tige (10, 210), comprenant:
- un boîtier (12, 212) ayant au moins une tige (140, 283);
- une manette (14, 214) attachée en pivotement au boîtier (12, 212); et
- une tige à cisaillement (110, 330) abritée en coulissement à l'intérieur du boîtier (12, 212) et connectée à la manette (14, 214),
dans lequel la manette (14, 214) est déplaçable entre une position fermée dans laquelle la manette (14, 214) est retenue de manière libérable à l'intérieur du boîtier (12, 212) et la tige à cisaillement (110, 330) s'étend hors du boîtier (12, 212), et une position ouverte, dans laquelle la manette (14, 214) est rétractée depuis le boîtier (12, 212) et la tige à cisaillement (110, 330) est rétractée à l'intérieur du boîtier (12, 212),
et dans lequel la manette (14, 214) est en outre déplaçable à une position intermédiaire dans laquelle la manette (14, 214) est retenue de manière libérable dans une position entre sa position fermée et sa position ouverte,
**caractérisé en ce que**
le verrou à tige (10) comprend en outre un élément en forme de doigt (118) connecté à la manette (14) et au boîtier (12), l'élément en forme de doigt (118) incluant au moins une fente (128) d'une taille et d'une forme propres à recevoir en coulissement ladite au moins une tige (140) du boîtier (12), ladite au moins une fente (128) incluant une première portion de fente (130), une seconde portion de fente (132), et une troisième portion de fente (134) qui effectue un pontage de la première et de la seconde portion de fente (130, 132) l'une avec l'autre, la troisième portion de fente (134) formant un arrêt (135) situé entre la première et la seconde portion de fente (130, 132), de telle façon que quand la manette (14) est déplacée de sa position fermée à sa position intermédiaire, ladite au moins une tige (140) du boîtier (12) se déplace à l'intérieur de la première portion de fente (130) de l'élément en forme de doigt (118) est engage l'arrêt (135) de l'élément en forme de doigt (118) afin de retenir de façon libérable la manette (14) dans sa position intermédiaire, et dans lequel l'élément en forme de doigt (118) est déplaçable depuis une position engagée dans laquelle ladite au moins une tige (140) du boîtier (12) engage l'arrêt (135) de l'élément en forme de doigt (118), et une position désengagée dans laquelle ladite au moins une tige (140) du boîtier (12) est désengagée vis-à-vis de l'arrêt (135) et est adaptée à se déplacer à l'intérieur de la seconde portion de fente (132) de l'élément en forme de doigt (118) de manière à permettre à la manette (14) d'être déplacée depuis sa position intermédiaire jusqu'à sa position ouverte ;
ou bien
**en ce que** la tige à cisaillement (330) inclut une fente (342) et un arrêt (344) situé à une extrémité de la fente (342), et dans lequel le verrou à tige (210) comprend en outre un mécanisme à bouton (372) incluant une broche transversale (384), dans lequel quand la manette (214) est dans sa position fermée, le mécanisme à bouton (372) est dans une position enfoncée de telle façon que la broche transversale (384) du mécanisme à bouton (372) est désengagée hors de la fente (342) de la tige de cisaillement (330),
dans lequel quand la manette (214) est déplacée depuis sa position fermée jusqu'à sa position intermédiaire, le mécanisme à bouton (372) est déplacé depuis sa position enfoncée jusqu'à une position relevée, et la tige à cisaillement (330) se rétracte à l'intérieur du boîtier (212) de telle façon que la broche transversale (384) du mécanisme à bouton (372) engage la fente (342) et la tige à cisaillement (330) et coulisse à l'intérieur jusqu'à ce que la broche transversale (384) engage l'arrêt (344) de la tige à cisaillement (330).

2. Verrou à tige (10) selon la revendication 1,
dans lequel l'élément en forme de doigt (118) inclut au moins un élément latéral (120) ayant une première extrémité (124) et une seconde extrémité (126) opposée à la première extrémité, et dans lequel ladite au moins une fente (128) de l'élément en forme de doigt (118) est formée à l'intérieur dudit au moins un élément latéral (120).

3. Verrou à tige (10) selon la revendication 2,
dans lequel ledit au moins un élément latéral (120) de l'élément en forme de doigt (118) inclut une paire d'éléments latéraux, et ladite au moins une tige (140) du boîtier (12) inclut une paire de tiges (140), et dans lequel la fente (128) de l'un des éléments latéraux (120) a une taille et une forme propres à recevoir en coulissement l'une des tiges (140) du boîtier (12), et la fente (128) de l'autre des éléments latéraux a une taille et une forme propres à recevoir en coulissement l'autre des tiges (140) du boîtier (12).

4. Verrou à tige (10) selon la revendication 3,
dans lequel l'élément en forme de doigt (118) inclut un élément de préhension (122) qui effectue un pontage de la paire d'éléments latéraux (120), et dans lequel l'élément de préhension (122) facilite le mouvement de l'élément en forme de doigt (118) depuis sa position engagée jusqu'à sa position désengagée.

5. Verrou à tige (10) selon la revendication 4,
dans lequel la première portion de fente (130) de la fente (128) de l'un des éléments latéraux (120) de l'élément en forme de doigt (118) est formée parallèle à la seconde portion de fente (132) de celui-ci, et la première portion de fente (130) de l'autre des éléments latéraux (120) de l'élément en forme de doigt (118) est formée parallèle à la seconde portion de fente (132) de celui-ci.

6. Verrou à tige (10) selon la revendication 5,
dans lequel la troisième portion de tige (134) de la fente (128) de l'un des éléments latéraux (120) de l'élément en forme de doigt (118) est positionnée en oblique par rapport à la première et à la seconde portion de fente (130, 132) de celui-ci, et la troisième portion de fente (134) de la fente (128) de l'autre des éléments latéraux (120) de l'élément en forme de doigt (118) est positionnée en oblique par rapport à la première et à la seconde portion de fente (130, 132) de celui-ci.

7. Verrou à tige (10) selon l'une quelconque des revendications précédentes, comprenant en outre un bras (102) ayant une première extrémité (106) et une seconde extrémité (104) opposée à la première extrémité du bras (102), la première extrémité (106) du bras étant attachée en pivotement à la manette (14) et la seconde extrémité (104) du bras étant attachée à la tige à cisaillement (110).

8. Verrou à tige (10) selon la revendication 7,
comprenant en outre au moins un ressort d'extension de doigt (142) ayant une première extrémité connectée à l'un des éléments latéraux (120) de l'élément de doigt (118) et une seconde extrémité opposée à la première extrémité dudit au moins un ressort d'extension de doigt (142) connecté au bras (102).

9. Verrou à tige (10) selon la revendication 8,
dans lequel ledit au moins un ressort d'extension de doigt (142) inclut une paire de ressorts d'extension de doigt (142), dont l'un est connecté à l'un de la paire d'éléments latéraux (120) et au bras (102), et dont l'autre est connecté à l'autre de la paire d'éléments latéraux (120) et au bras (102).

10. Verrou à tige (10) selon l'une des revendications 2 à 6,
dans lequel la manette (14) inclut un bloc (94), dans lequel la première extrémité (106) du bras (102) est attachée en pivotement au bloc (94), et les premières extrémités (124) des éléments latéraux (120) des éléments en forme de doigt (118) sont attachées en pivotement au bloc (94).

11. Verrou à tige (10) selon l'une quelconque des revendications précédentes, dans lequel la manette (14, 214) inclut une gâchette (78, 294) qui est susceptible d'être engagée de façon libérable avec ladite au moins une tige (140, 283) du boîtier (12, 212) quand la manette (14, 214) est dans sa position fermée.

12. Verrou à tige (10) selon l'une quelconque des revendications précédentes, dans lequel la manette (14, 214) inclut un ressort de rappel (76, 292).

13. Verrou à tige (10) selon l'une quelconque des revendications précédentes, dans lequel le boîtier (12, 212) inclut une première extrémité (16, 216), une seconde extrémité (18, 218) opposée à la première extrémité (16, 216) du boîtier (12, 212), et une ouverture (38, 248) formée à l'intérieur de la première extrémité (16, 216) du boîtier (12, 212), et dans lequel la tige à cisaillement (110, 330) a une taille et une forme propres à coulisser à l'intérieur de l'ouverture (38, 248).
